# EUROPEAN PATENT SPECIFICATION

(11) **EP 2 338 763 B1**
(45) Date of publication and mention of the grant of the patent: **31.10.2012**
(21) Application number: 09425524.7
(22) Date of filing: 22.12.2009
(51) Int. Cl.: B62D 5/12, B62D 5/24, B62D 7/14

(54) **Steering control system for vehicles with two steering axles**
Lenkungssteuersystem für Kraftfahrzeugen mit zwei Lenkachsen
Système de commande de direction pour véhicules avec deux essieux directeurs

(43) Date of publication of application: 29.06.2011
(73) Proprietor: Astra Veicoli Industriali S.p.A., 29100 Piacenza (IT)
(72) Inventor: Antonio Benetti, 25010 San Zeno Naviglio (IT)
(74) Representative: Borsano, Corrado

(56) References cited:
- DE-A1- 10 230 309
- DE-A1-102006 023 784
- JP-A- 2000 142 449
- US-A1- 2006 208 443

## Description

### Application field of the invention

The present invention refers to the field of the steering control systems for vehicles with two adjacent front steering axles and in particular for multi-axle industrial vehicles with two front steering axles mechanically connected to each other.

### Description of the prior art

The steering control systems for vehicles with two adjacent front steering axles present several problems, the most important of which are described below.

Firstly, the systems known in the art are particularly complex in terms of the realized kinematic motion and comprise a number of components, joints, crank gears and driving gears which, with the passing of the time, may generate backlashes compromising the precision of the steering control system.

Another problem of the systems known in the art derives from the fact that the hydraulic power steering is placed almost under the driving place, therefore the distance between the driving steering gear and the two axles is considerable, and the distribution of the forces among the different components negatively affects the strength and the precision of the system itself.

A further problem to be considered while defining the kinematic mechanism controlling the steering is generated by the fact that the two axles do not steer in the same way, since the first axle, with respect to the front part of the vehicle, needs to have a larger steering angle than the second axle.

Strength and precision problems are even more serious when the system comprises an additional hydraulic cylinder, for assisting the hydraulic power steering. Also in this case, the action of the additional cylinder has to be distributed between the two axles by means of driving gears and of tie rods, some of which may be housed over the frame, in order to avoid interfering with the other vehicle components, but thus reducing the space for the driving cabin, for the passage for the cables and for the different hydraulic and pneumatic pipes, and for installing equipment on the back of the cabin. In some cases, said additional cylinder directly acts on one axle, while the assistance for the other axle is realized by means of two, three or more driving gears, generating a remarkable inequality in the distribution of the forces, between the assistance provided to the first or to the second axle of the vehicle.

DE10230309 discloses a steering system having the control rod of the first axle directly hinged on the oscillating arm of the hydraulic power steering. The features of such system are in the preamble of claim 1.

Consequently, also the hydraulic system for activating the hydraulic power steering and the additional cylinder is complex, due to the inconvenient position of the hydraulic power steering , with awkward passages for the pipes which reach the oil tank and the hydraulic power steering pump on the engine.

Finally, the different components of the steering kinematic mechanism are fixed to the vehicle frame, which therefore has to support a steering control system with various components, joints and driving gears, increasing its production costs.

### Summary of the invention

Therefore the aim of the present invention is to overcome all the drawbacks mentioned above and to provide a steering control system for vehicles with two steering axles suitable to solve the problems of strength, precision, and limited dimensions.

The subject of the present invention is a steering control system for vehicles with two steering axles according to claim 1.

The subject of the present invention is in particular a steering control system for a vehicle with two steering axles, as described more fully in the claims which are an integral part of the present description.

### Brief description of the Figures

Further purposes and advantages of the present invention will become clear from the following detailed description of a preferred embodiment (and relative alternative embodiments) and the drawings that are attached hereto, which are merely illustrative and non-limitative, in which:
figure 1 shows a perspective view of a vehicle comprising a steering control system for vehicles with two steering axles according to the present invention,
figure 2 shows another perspective view of the same vehicle as in figure 1,

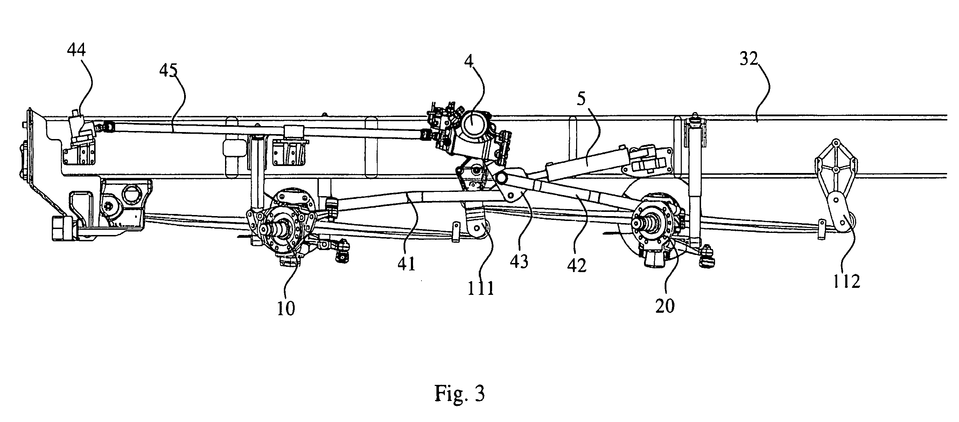

figure 3 shows a side view of the same vehicle as in the previous figures.

In the drawings the same reference numbers and letters identify the same elements or components.

### Detailed description of preferred embodiments of the invention

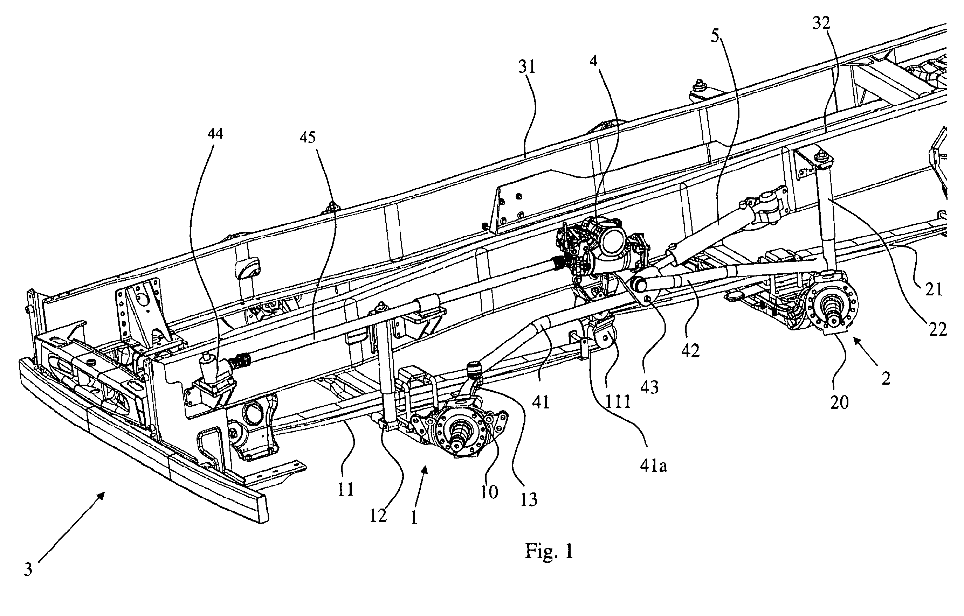

With reference to figure 1, the steering control system according to the present invention is connected to a vehicle frame 3. The frame comprises, for example, a pair of parallel and adjacent longitudinal members 31 and 32.

Figure 1 shows the vehicle side where the driving place is positioned.

According to the present invention, in correspondence of the driving place, a 90° driving gear box 44 is placed, suitable for transferring the movements of the steering gear to the hydraulic power steering 4.

The hydraulic power steering 4 has an horizontal configuration, namely the connecting shaft 45, defining a cardan shaft, which extends in a parallel way with respect to the longitudinal member 32, is parallel to the hydraulic power steering axis, while the lever 43 on the hydraulic power steering 4 is orthogonal to the driving steering gear itself.

Therefore the hydraulic power steering is placed in a rear position with respect to the driving position and in particular in a position comprised between the first axle 1 and the second axle 2 of the vehicle.

A first control rod 41 of the first axle 1 and a second control rod 42 of the second axle 2 are hinged to the arm 43 of the hydraulic power steering . A first end of the first rod 41 is therefore connected to the arm 43 of the hydraulic power steering 4 while its second end is connected to the hub 10 of the first axle. A first end of the second rod 42 is therefore connected to the arm 43 of the hydraulic power steering 4 while its second end is connected to the hub 20 of the second axle 2.

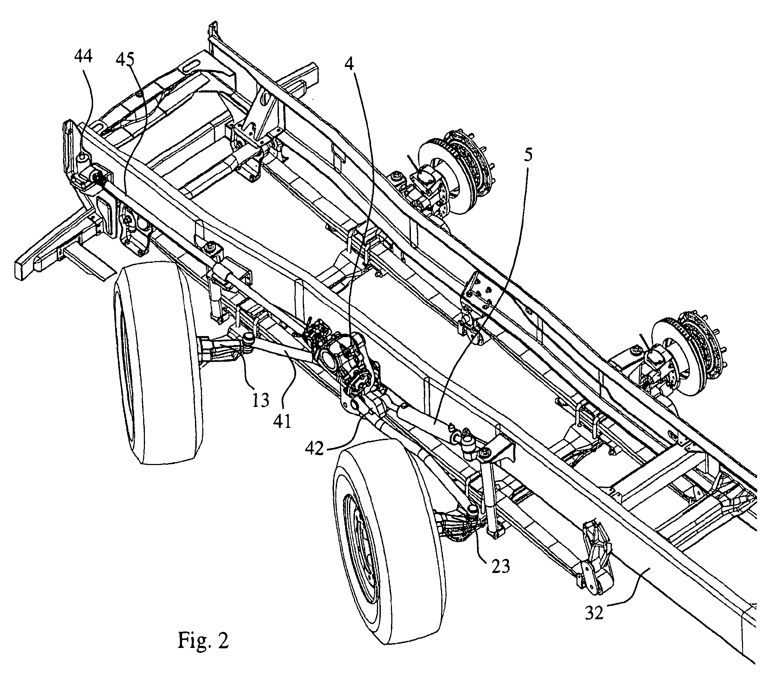

Preferably said second end of said first rod 41 and of said second rod 42 are connected to respectively to the first hub 10 and the second hub 20 by means of respective levers 13 and 23, that can be better seen in figures 1 and 2. Said interconnections with said levers 13 and 23 are realized by means of ball joints.

According to the invention, the position of the hydraulic power steering is intermediate with respect to the first 1 and the second 2 axle.

The connections of the rods 41 and 42 on the lever 43 of the hydraulic power steering are placed so that they have different radius with respect to the fulcrum of the lever itself.

Thus, by varying the distance from the fulcrum of the arm 43, it is possible to vary the travel of each rod and therefore the steering angle of the respective axle (1 or 2).

Also the levers 13 and 23 on the two hubs 10 and 20 may be defined with different lengths in order to contribute to the correct differentiation of the steering angles of the two axles 1 and 2.

Hence, it is preferable that the two axles have different radius of curvature: the first axle steers with a larger angle, while the second with a smaller angle.

Therefore, it is possible to obtain different characteristics according to the particular needs of the vehicle by appropriately choosing the connection points of the components on the lever 43.

Advantageously, it is possible to directly control both axles with only two rods. Moreover, an intermediate position of the hydraulic power steering between the two axles determines a more equal distribution of the forces between the two axles. In particular, the hydraulic power steering 4 is integrally connected to the frame a small space above the axles.

Thus the space occupied by the system is limited in height and therefore it leaves more free space for the vehicle arrangement over the frame.

Moreover, no lever or tie rod or joint is placed in an upper position with respect to the frame, allowing a simple allocation of the cabin, of the pipes, of the equipment, etc..

According to an alternative embodiment, the industrial vehicles which have to take particular stresses for the activation of the steering control system may comprise an additional control piston 5 which cooperates with the hydraulic power steering 4.

According to what is shown in the figures, the additional piston directly acts on said arm 43 of the hydraulic power steering 4. In particular, a first end of said additional piston is hinged to said arm 43, while its second end is connected to the frame 32 by means of a ball joint.

The additional piston is preferably housed behind the hydraulic power steering 4, namely in a position opposite to the housing of the steering driving gear comprising the connecting shaft 45 with respect to the hydraulic power steering .

The steering gear transmits the motion to the steering box 44 which does not stress the frame, since the torque applied on the steering box and on the driving gear is the same as the one applied by driver. Hence it is preferable to realize a driving gear with longer rods for the parts that are subjected to low torque and therefore low stresses and low wear, and shorter leverages and rods for the parts which are subjected to higher stresses.

According to a preferred alternative embodiment, the first axle 1 comprises a leaf spring suspension system 11, and the second axle comprises a leaf spring 21. The first leaf spring 11 is hinged to the frame in a first point and it is connected to the frame in a second point 41a by means of a connecting rod 111. A first end of the second leaf spring 21 is hinged to the frame 32 in the same point as the connecting rod 111. A second end of the second leaf spring 21 is connected to the frame 32 by means of a further connecting rod 112.

Preferably, the hydraulic power steering 4 is placed in correspondence of said connecting rod 111, namely in correspondence of the middle point between the two axles 1 and 2.

A shock absorber 12 is placed in correspondence of the first axle, between the frame 32 and the leaf spring 11.

A shock absorber 22 is placed in correspondence of the second axle, between the frame 32 and the leaf spring 21.

The embodiment shown in the figures relate to two adjacent steering axles.

When the arm of the hydraulic power steering rotates around its own fulcrum defined in the hydraulic power steering , it pushes forward or backward the rods 41 and 42, which transmit the motion to the levers 13 and 23 which are integral to the hubs 10 and 20.

In order to avoid the limitation of the steering angles, said rods 41 and 42 are partially curved, so that a first part extends in a parallel way with respect to the frame and a second part stretches out towards the respective hub.

It is preferable to strengthen the area where the hydraulic power steering 4 should be placed, for example by applying a cross member connecting the two longitudinal members, in order to counterbalance torsion stress and deforming torque applied by the hydraulic power steering on the longitudinal member 32 itself.

The advantages deriving from the use of this invention are evident:
- forces are equally distributed between the two axles,
- the distribution of the forces between the control rods 41 and 42 is direct, namely without any driving gear, crank gear, etc.,
- no element stretches out from the frame,
- the additional cylinder is connected so that it can directly act on both axles,
- the steering angles of the wheels can be optimized by varying the connecting point of the arms of the hydraulic power steering , or by varying the positioning of the ball joints connecting said rods to the hubs,
- the stresses applied on the frame are limited to the connection area between it and the hydraulic power steering , since the front control part is realized by means of a cardan shaft 45 which can bear limited activation stresses.

It will be apparent to the person skilled in the art that further alternative and equivalent embodiments of the invention can be conceived and reduced to practice without departing from the scope of the invention as defined by the appending claims.

From the description set forth above it will be possible for the person skilled in the art to embody the invention with no need of describing further construction details.

## Claims

1. Steering control system for vehicles with two steering axles, the vehicle comprising a frame (32) having a pair of parallel and adjacent longitudinal members (31, 32), a first steering axle (1), a second steering axle (2), the steering system comprising
- a hydraulic power steering (4) connected to one of said longitudinal member (32) and having
- an oscillating arm (43) and
- a cardan shaft (45) which extends in a parallel way with respect to the longitudinal member (32) and in a perpendicular way with respect to the oscillating arm (43) in a 90° configuration,
- a first control rod (41) of the first axle (1), directly hinged to the oscillating arm (43),
- a second control rod (42) of the second axle (2), **characterized in that** said hydraulic power steering (4) is connected to the longitudinal member (32) between said first (1) and second axle (2) and **in that**
said second control rod (42) is directly hinged to the oscillating arm (43) of said hydraulic power steering (4).

2. System according to claim 1, wherein the connection points of said first (41) and second control rod (42) to said arm (43) are different, so that the rods may have a different travel.

3. System according to claim 1, wherein said first (41) and second control rod (42) are connected to the hubs of said first (1) and second axle (2) by means of respective levers (13, 23) stretching out from the respective hubs (10, 20).

4. System according to claim 3, wherein said levers (13, 23) have different length, so that the axles may have a different steering angle.

5. System according to one of the previous claims, further comprising an additional cylinder (5) directly acting on said arm (43) of the hydraulic power steering (4).

6. System according to claim 5, wherein the first end of said additional cylinder (5) is connected to the frame (32) and its second end is connected to said arm (43).

7. System according to claims 1 and 5, wherein said additional cylinder (5) is placed in a position opposite to the cardan shaft (45) and with respect to the hydraulic power steering (4).

8. Industrial vehicle with two steering axles comprising a steering control system according to any or the previous claims.

## Patentansprüche

1. Lenksteuersystem für Fahrzeuge mit zwei Lenkachsen, wobei das Fahrzeug einen Rahmen (32) mit einem Paar paralleler und benachbarter Längselemente (31, 32), eine erste Lenkachse (1) und eine zweite Lenkachse (2) umfasst, wobei das Lenksystem umfasst:
- ein hydraulisches Servolenksystem (4), das mit einem des Längselements (32) verbunden ist und aufweist:
- einen oszillierenden Arm (43), und
- eine Kardanwelle (45), die sich in paralleler Weise in Bezug auf das Längselement (32) und in rechtwinkliger Weise in Bezug auf den oszillierenden Arm (43) in einer Konfiguration von 90° erstreckt,
- eine erste Steuerstange (41) der ersten Achse (1), die direkt an dem oszillierenden Arm (43) angelenkt ist,
- eine zweite Steuerstange (42) der zweiten Achse (2),
**dadurch gekennzeichnet, dass** die hydraulische Servolenkung (4) mit dem Längselement (32) zwischen der ersten (1) und zweiten Achse (2) verbunden ist, und dass die zweite Steuerstange (42) direkt an dem oszillierenden Arm (43) der hydraulischen Servolenkung (4) angelenkt ist.

2. System nach Anspruch 1,
wobei die Verbindungspunkte der ersten (41) und zweiten Steuerstange (42) mit dem Arm (43) verschieden sind, so dass die Stangen einen unterschiedlichen Weg besitzen können.

3. System nach Anspruch 1,
wobei die erste (41) und zweite Steuerstange (42) mit den Naben der ersten (1) und zweiten Achse (2) mittels jeweiliger Hebel (13, 23) verbunden sind, die sich von den jeweiligen Naben (10, 20) nach außen erstrecken.

4. System nach Anspruch 3,
wobei die Hebel (13, 23) verschiedene Länge besitzen, so dass die Achsen einen unterschiedlichen Lenkwinkel aufweisen können.

5. System nach einem der vorhergehenden Ansprüche,
ferner mit einem zusätzlichen Zylinder (5), der direkt auf den Arm (43) der hydraulischen Servolenkung (4) wirkt.

6. System nach Anspruch 5,
wobei das erste Ende des zusätzlichen Zylinders (5) mit dem Rahmen (32) verbunden ist und sein zweites Ende mit dem Arm (43) verbunden ist.

7. System nach einem der Ansprüche 1 und 5,
wobei der zusätzliche Zylinder (5) in einer Position gegenüberliegend zu der Kardanwelle (45) und in Bezug auf die hydraulische Servolenkung (4) angeordnet ist.

8. Industrielles Fahrzeug mit zwei Lenkachsen, mit einem Lenksteuersystem nach einem der vorhergehenden Ansprüche.

## Revendications

1. Système de commande de direction pour des véhicules avec deux essieux directeurs, le véhicule comprenant un châssis (32) ayant une paire d'organes longitudinaux parallèles et adjacents (31, 32), un premier essieu directeur (1), un second essieu directeur (2), le système de direction comprenant
- une direction assistée hydraulique (4) raccordée à un desdits organes longitudinaux (32) et ayant
- un bras oscillant (43) et
- un arbre à cardan (45) qui s'étend de façon parallèle par rapport à l'organe longitudinal (32) et de façon perpendiculaire par rapport au bras oscillant (43) dans une configuration à 90 °,
- une première tige de commande (41) du premier essieu (1), directement articulée sur le bras oscillant (43),
- une seconde tige de commande (42) du second essieu (2),
**caractérisé en ce que** ladite direction assistée hydraulique (4) est raccordée à l'organe longitudinal (32) entre lesdits premier (1) et second (2) essieux et **en ce que**
ladite seconde tige de commande (42) est directement articulée sur le bras oscillant (43) de ladite direction assistée hydraulique (4).

2. Système selon la revendication 1, dans lequel les points de raccordement desdites première (41) et seconde (42) tiges de commande auxdits bras (43) sont différents, de sorte que les tiges peuvent avoir une course différente.

3. Système selon la revendication 1, dans lequel lesdites première (41) et seconde (42) tiges de commande sont raccordées aux moyeux desdits premier (1) et second (2) essieux au moyen de leviers respectifs (13, 23) s'étendant depuis les moyeux respectifs (10, 20).

4. Système selon la revendication 3, dans lequel lesdits leviers (13, 23) ont une longueur différente, de sorte que les essieux peuvent avoir un angle de braquage différent.

5. Système selon l'une des revendications précédentes, comprenant en outre un cylindre supplémentaire (5) agissant directement sur ledit bras (43) de la direction assistée hydraulique (4).

6. Système selon la revendication 5, dans lequel la première extrémité dudit cylindre supplémentaire (5) est raccordée au châssis (32) et sa seconde extrémité est raccordée audit bras (43).

7. Système selon les revendications 1 et 5, dans lequel ledit cylindre supplémentaire (5) est placé dans une position opposée à l'arbre à cardan (45) et par rapport à la direction assistée hydraulique (4).

8. Véhicule industriel avec deux essieux directionnels comprenant un système de commande de direction selon l'une quelconque des revendications précédentes.
